# EUROPÄISCHE PATENTANMELDUNG

(11) **EP 1 850 576 A1**
(43) Veröffentlichungstag der Anmeldung: **31.10.2007**
(21) Anmeldenummer: 06008746.7
(22) Anmeldetag: 27.04.2006
(51) Int. Cl.: H04M 17/00, H04M 7/00

(54) **Verfahren und System mit Berechtigungsprüfung beim Verbindungsaufbau**

(71) Anmelder: NOKIA SIEMENS NETWORKS GMBH & CO. KG, 81541 München (DE)
(72) Erfinder: Hoffmann, Klaus, 81735 München (DE)
(74) Vertreter: Kley, Hansjörg

(57) **Zusammenfassung**

Gegenwärtige Online Charging-Mechanismen erlauben im Fall der non blocking Anwendung, dass der Verbindungsaufbau zunächst zugelassen wird, obwohl zu diesem Zeitpunkt noch nicht klar ist oder klar gewesen sein kann, ob ein Prepaid Teilnehmer (SIP-Client) noch genügend Geld auf dem Konto hat. Deshalb führt dies dazu, dass bei einem anzurufenden Teilnehmer (Subs) ein Anruf signalisiert wird (es klingelt) und anschließend der Call ausgelöst werden muß, falls nicht genügend Geld auf dem Konto vorhanden ist. Um dieses «Ghost ringing» zu vermeiden, aber trotzdem einen schnellen Verbindungsaufbau zu gewährleisten, wird ein Verfahren vorgeschlagen, dass das Zurückhalten eines Adresselementes, z.B. die letzte Ziffer beinhaltet, soland noch keine Autorisierung vom Online Charging System (OCS) eingetroffen ist. Alternativ wird der Verbindungsaufbau mit einer Vorbedingung «Nicht klingeln» gemäss IETF RFC 3212 eingeleitet. Die Erfindung ist auch für andere nicht monetäre Berechtigungen z.B. für «lawful interception» anwendbar.

## Beschreibung

Die vorliegende Erfindung betrifft ein verfahren mit einer Berechtigungsprüfung bei einem Verbindungsaufbau von einem an einem packetvermittelten Netzwerk angeschlossenen A-Teilnehmer zu einem B-Teilnehmer gemäss dem Oberbegriff des Patentanspruches 1 sowie ein System zu dessen Durchführung.

Im folgenden wird anstelle einer deutschen Nichtfachsprache die englisch-sprachige Nomenklatur aus den Normen der ITU-T und der IETF benutzt, wie z.B, «IP-Gateway», «Ghost Ringing», «Charging» oder «Advice of Charge» AoC. Dadurch lassen sich Unklarheiten vermeiden. Ebenso werden allgemein bekannte kurze englischsprachige Begriffe anstelle einer deutschen Nichtfachsprache verwendet wie z.B. «routing», «bearer» «lawful interception» usw. Eine Liste der verwendeten Abkürzungen und Begriffe am Schluss dieses Dokumentes ist integraler Bestandteil dieser Schrift; ebenso wird auf das Vokabular gemäss [1] abgestützt.

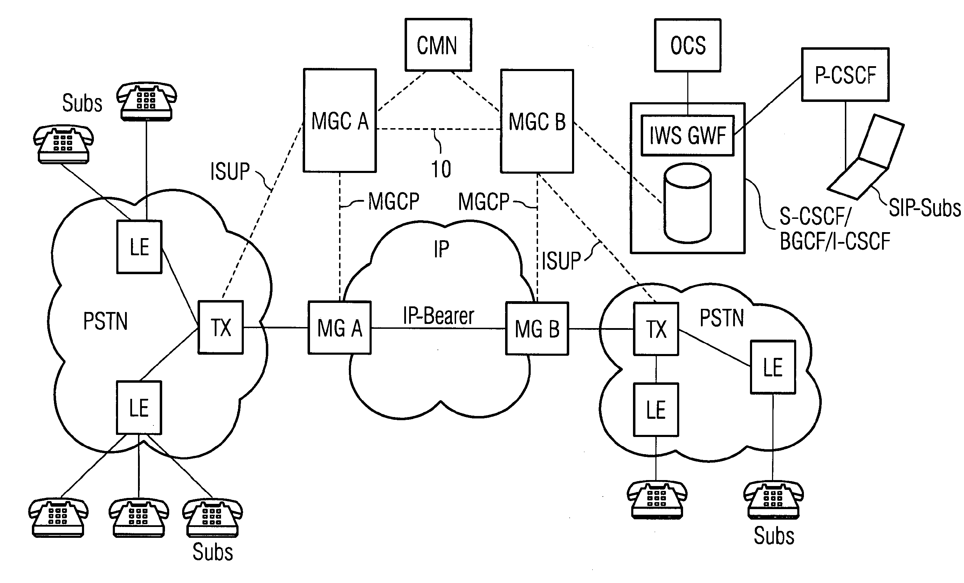

Neuere Kommunikationsarchitekturen sehen die Trennung vermittlungstechnischer Netzwerke in verbindungsdienstbezogene Einheiten und den Transport der Nutzinformationen (bearer Control) vor. Die grundsätzliche Architektur ist in Figur 1 dargestellt. Hieraus resultiert eine Dekomposition/ Trennung von Verbindungsaufbau und Medium- bzw. Beareraufbau. Die Übertragung der Nutzinformationen (Durchschaltung des Nutzkanals) kann dabei über unterschiedliche hochbitratige Transporttechnologien wie z.B. ATM, IP oder Frame Relay vorgenommen werden. Die Steuerung der Media Gateways MG A, MG B können von jeweils zugeordneten Media Gateway Controllern MGC A, MGC B durchgeführt werden, Zur Steuerung der Media Gateways MG A, MG B verwenden die Media Gateway Controller MGC A, MGC B normierte Protokolle, wie z. B. das MGCP Protokoll [2]. Zur Kommunikation untereinander verwenden die Media Gateway Controller MGC A, MGC B ein durch die ITU-T standardisiertes BICC (Bearer Independent Call Control) Protokoll, das aus einer Mehrzahl von standardisierten Protokollen gebildet ist und somit eine Protokollfamilie umfasst [3].

Erste grundsätzliche Betrachtungen haben innerhalb der ITU-T zur Draft Recommendation Q.1912.5 «Interworking SIP and BICC/ISUP» [3] geführt. Darin sind keine Angaben zum Charging, d.h. zum Thema Vergebührung, enthalten.

In 3GPP TS 23.240 [4] wird das sogenannte Charging behandelt und zwar in den Ausprägungen
- «offline charging functions» im Abschnitt 4.3.1 und
- «online charging functions» im Abschnitt 4.3.2 .

Für den Fall «online charging» wird entsprechend dem Abschnitt 4.3.2.1 in [4] vorgeschlagen, zur Bestimmung eines noch verfügbaren Guthabens des betreffenden Teilnehmers den Verbindungsaufbau zu unterbrechen, d.h. gar nicht zu starten, bis eine Anwort vom Account Server empfangen wurde, um dann den Verbindungsaufbau fortzusetzen, falls noch genug Guthaben für diesen Account zur Verfügung steht. Der Nachteil ist jedoch dass der verbindungsaufbau verzögert wird. Um diese Verzögerung zu umgehen wurde gemäss Abschnitt 5.2.2 in [4] an eine Optimierung gedacht:
i) Das Netzelement erlaubt den Start der «user session» vor dem Empfang der Autorisation vom OCS, das heisst vor dem Start der Credit Control Session, vgl, in [4] p. 31 Mitte, Ziffer 1).
ii) Das OCS verweigert die Anfrage zu Beginn, das heisst es wird keine Credit Control Session gestartet. In diesem Fall verbietet das Netzelement NE den Verbindungsaufbau oder falls dieser bereits erfolgt ist, wird dieser abgebrochen vgl. in [4] p. 31 Mitte, Ziffer 2).

Diese Optimierung ist vorgesehen, für den Fall, dass anders als im Abschnitt 4,3.2.1 von [4], insbesondere die folgenden Vorgaben nicht erfüllt sind:

Die Charging Trigger Function CTF muss in der Lage sein, den Verbindungsaufbau zu verzögern, bis eine Freigabe vom Online Charging System OCS gewährt wurde.

Dabei musste festgestellt werden, dass derzeit bei Online Charging im Fall der non blocking Anwendung (verbindungsaufbau nicht in der CSCF aufhalten) der Verbindungsaufbau zunächst zugelassen wird, obwohl zu diesem Zeitpunkt noch nicht klar ist oder klar gewesen sein kann, ob ein Prepaid Teilnehmer noch genügend Geld auf dem Konto hat. Deshalb führt dies dazu, dass beim B-Tln ein Anruf signalisiert wird (es klingelt) und anschließend der Call ausgelöst werden muß, falls nicht genügend Geld auf dem Konto vorhanden ist. Dieses Phänomen wird beim B-Teilnehmer als «Ghost ringing» bezeichnet. Damit aber trotzdem, also mit der Option im Abschnitt 5.2.2 von [4] ohne Störungen beim B- Teilnehmer und peinliche Rückfragen bei A-Teilnehmer entstehen, da der B-Teilnehmer die Rufnummer des A-Teilnehmer sehen kann und bemerkt, dass der Ruf wiederabgebrochen werden musste. Aus diesem Grunde ist eine Lösung erforderlich, die keine lästigen Störungen des B-Teilnehmers verursacht. Diese lästigen Störungen treten nicht nur für den klassischen Sprachdienst auf, sondern manifestieren sich auch bei FAX-Verbindungen, hier insbesondere beim FAX-Abruf und bei Video-Verbindungen.

Vorstehend wurde auf das Problem des ausreichenden (prepaid) Guthabens eingehend erörtet. In einem allgemeineren Kontext sind auch andere Gründe massgeblich, um Ressourcen weitestgehend reservieren zu können, jedoch deren Nutzung vom Vorhandensein einer Berechtigung abhängig zu machen: Dies ist beispielsweise auch relevant für den Dienst «lawful interception». Für die klassische Leitungsvermittlung ist dieser Dienst unter ETSI TR 102 053 [7] spezifiziert. Allgemeinere Konzepte zu «lawful interception» sind dem Dokument ETSI RT 101 943 [6] zu entnehmen.

Der vorliegenden Erfindung liegt daher die Aufgabe zugrunde, ein verfahren mit einer Berechtigungsprüfung anzugeben, dass abhängig von einer Bedingung, z.B. ein ausreichendes Guthaben auf einem Konto eines A-Teilnehmers einen schnellen Verbindungsaufbau erlaubt, ohne dass es im Fall eines ungenügenden Guthabens zu einem Anruf/Klingeln beim B-Teilnehmer kommt, der dann in der Folge wieder abgebrochen werden müsste oder ohne dass ein Dienst erst verzögert aufgeschaltet werden kann, z.B. bei «lawful interception».

Diese Aufgabe wird für ein Verfahren der eingangs genannten Art durch die im Patentanspruch 1 angegebenen Merkmale gelöst.

Durch das erfindungsgemässe Verfahren, wonach
«der verbindungsaufbau eingeleitet aber nicht abgeschlossen wird, solange vom Autorisierungsserver (AuS) keine Meldung vorliegt, wonach für die Verbindung oder ein zu dieser Verbindung aufzuschaltender Dienst eine ausreichende Berechtigung vorliegt»;
wird ein «alert» (es klingelt) beim Teilnehmer nur dann ausgelöst, wenn für einen der Teilnehmer für die bevorstehende Nutzung oder Aktivierung eines Dienstes eine Berechtigung zugesichert ist. Dadurch, dass der verbindungsaufbau aber eingeleitet aber nicht abgeschlossen worden ist, braucht bei Vorliegen einer «resource usage authorisation» nicht lange auf die Durchschaltung zu gewartet zu werden.

Weitere vorteilhafte Ausgestaltungen der Erfindung sind in weiteren Ansprüchen angegeben, insbesondere in der klassischen Adressierung mit einer E.164-Nummer lässt sich die vorliegende Erfindung besonders einfach implementieren, in dem die Wahl bis zur letzten Ziffer vorgenommen wird und die letzte ziffer erst nach Vorliegen der «resource usage authorisation» weiter geleitet wird. Zu beachten ist, dass dies nicht auf der A-Teilnehmerseite erfolgt, hier ist ggf eine Blockwahl obligatorisch wie z.B. beim GSM, sondern dass im Netz an jener Stelle die letzte Ziffer zurückgehalten wird, die die Online Charging Funktion anbietet, hier z. B. die Call Server Control Function CSCF.

Die Erfindung wird nachfolgend anhand der Zeichnung beispielsweise näher erläutert. Dabei zeigen:
- Figur 1: Architektur eines Kommunikationsnetzwerkes mit SIP- und PSTN-Teilnehmern;

Eine Ausführungsform der vorliegenden Erfindung wird für den Fall eines ausreichenden Gebührenguthabens erläutert. Dabei werden Begriffe und Funktionen aus dem Dokument 3GPP TS 23.240 [4] verwendet . Dazu wird ein Online Charging System OCS im Sinne des Dokumentes vorausgesetzt. Insbesondere wird die Figur 4.3.1 aus dem Dokument 3GPP TS 23.240 [4] und die darin gezeigten Funktionen hiermit integriert, ohne dass diese Figur in dieses Dokument aufgenommen wird.

Die Erfindung ist aber keineswegs darauf beschränkt, sondern kann auch z.B. für Lawful interception angewendet werden.

Die einzige Figur 1 zeigt eine Architektur eines Kommunikationsnetzwerkes mit SIP-Client und PSTN-Teilnehmern. Für das Ausführungsbeispiel wird angenommen, dass der SIP-Client der A-Teilnehmer ist und einer der in Figur 1 mit Subs gekennzeichneten Teilnehmer der betreffende B-Teilnehmer ist.

Eine bevorzugte Ausführungsform der vorliegenden Erfindung, d.h. eines Verfahrens zur Echtzeitvergebührung wird anhand der Tabellen 1 und 2 erläutert. Die Tabelle 1 beinhaltet den Fall, wo für den Verbindungsaufbau seitens des A-Teilnehmers ein ausreichendes Guthaben auf einem Konto des «Online Charging Systems» OCS vorhanden ist. Der Einfachheit halber sind A-Teilnehmer mit A,-Tln und B-Teilnehmer mit B-Tln abgekürzt.

Ablauf unter der Voraussetzung eines ausreichenden Guthabens:

**Tabelle 1: Ablauf unter der Voraussetzung eines ausreichenden Guthabens**

| **A-seitiger Endpunkt** | **CSCF** | **OCF/OCS** | **B-seitiger Endpunkt** |
|---|---|---|---|
| INVITE ohne preconditio n indication (RFC 3312) mit SDP → | INVITE mit precondition indication (RFC 3312) in SDP Richtung B Seite → m=audio 30000 RTP/AVP 0 c=IN IP4 192.0.2.4 a=curr:qos local none a=curr:qos remote sendrecv a=des:qos mandatory local sendrecv a=des:qos mandatory remote sendrecv | OCF wird von CSCF (CTF) informiert und abgefragt ob Guthaben vorhanden | |
| | | | |
| | zusätzlich noch das option tag "precondition" im Require Header falls nicht vorhanden: Gegebenenfalls noch "100rel" tag in the Supported header field and SHOULD include an Allow header field with the "UPDATE" tag | | |
| | | | Nach Empfang der INVITE Sendet B eine 183 mit SDP mit (Tln wird nochnicht gerufen, preconditions müssen erfüllt sein) ←- m=audio 20000 RTP/AVP 0 c=IN IP4 192.0.2.1 a=curr:qos local sendrecv a=cuxr:qos remote none a=des:qos mandatory local sendrecv a=des:qos mandatory remote sendrecv |
| | CSCF erhält die 183 von B und sendet diese 183 nicht zum A-Tln weiter, weil der CSCF in der initial INVITE die INVITE modifziert hat, damit der B-Tln noch nicht gerufen wird. | | |
| | | OCF antwortet und mit ausreichendes Guthaben für für A-Tln | |
| | CSCF hat positive Antwort von OCF bekommen und sendet PRACK SDP mit Richtung B Seite → m=audio 30000 RTP/AVP 0 c=IN IP4 192_0_2_4 a=curr:qos local sendrecv a=curr:qos remote sendrecv a=des:qos mandatory local sendrecv a=des:qos mandatory remote sendrecv oder eine PRACK ohne SDP aber dafür eine UPDATE mit dem SDP wie für die PRACK beschrieben. | | |
| | | | B-Tln empfängt PRACK (und ggf. die UPDATE) , damit sind die preconditions erfüllt und der Tln darf gerufen werden. Und antwortet mit einer 200 OK auf PRACK mit SDP ( falls SDP in der PRACK empfangen wurde) oder noch zusätzlich die 200 OK auf die UPDATE mit dem SDP ←- m=audio 20000 RTP/AVP 0 c=IN IP4 192.0.2.1 a=curr:qos local sendrecv a=curr:qos remote sendrecv a=des:qos mandatory local sendrecv a=des:qos mandatory remote sendrecv |
| | CSCF erhält die 200 OK zur PRACK von B und sendet diese PRACK nicht zum A-Tln weiter, weil der CSCF in der initial INVITE die INVITE modifiziert und die PRACK selbst generiert hat. | | |
| | | | Da der B- Tln gerufen wurde, kann jetzt die 180 Ringing gesendet werden. |

Ablauf unter der Voraussetzung eines nicht ausreichenden Guthabens:

**Tabelle 2: Ablauf unter der Voraussetzung eines nicht ausreichenden Guthabens**

| **A-seitiger Endpunkt** | **CSCF** | **OCF** | **B-seitiger Endpunkt unterstützt RFC3212** |
|---|---|---|---|
| INVITE ohne precondition indication (RFC 3312) mit SDP Offer → | INVITE mit precondition indication (RFC 3312) in SDP Richtung B Tln → m=audio 30000 RTP/AVP 0 c=IN IP4 192.0.2.4 a=curr:qos local none a=curr:qos remote sendrecv a=des:qos mandatory local sendrecv a=des:qos mandatory remote sendrecv zusätzlich noch das option tag "precondition" im Require Header falls nicht vorhanden: Gegebenenfalls noch "100rel" tag in the Supported header field and SHOULD include an Allow header field with the "UPDATE" tag | Wird informiert und abgefragt ob Guthaben vorhanden | |
| | | | Nach Empfang der INVITE Sendet B eine 183 mit SDP mit (Tln wird nochnicht gerufen, preconditions müssen erfüllt sein) ←- m=audio 20000 RTP/AVP 0 c=IN IP4 192.0.2.1 a=curr:qos local sendrecv a=curr:qos remote none a=des:qos mandatory local sendrecv a=des:qos mandatory remote sendrecv |
| | CSCF erhält die 183 von B und sendet diese 183 nicht zum A-Tln weiter, weil der CSCF in der initial INVITE die INVITE modifziert hat, damit der B-Tln noch nicht angeklingelt wird.. | | |
| | | OCF antwortet und es gibt nicht genug Guthaben für A-Tln. | |
| | CSCF hat negative Antwort von OCF bekommen und CANCEL → | | |
| | | | B-Tln empfängt CANCEL sendet 200 auf die CANCEL, und der Verbindungsversuch wird beendet. ←- 200 OK für die CANCEL |
| | | | Standardgemäß wird der response 487 request terminated für die CANCEL gesendet. Es gibt kein Klingeln beim B-Tln, |
| | Verbindung wird standardgemäß abgebaut. | | |
| | | | |

Die vorstehend erwähnte Unterstützung nach RFC3212 ist wie folgt zu verstehen:

Der RFC3212 [5] bietet gemäss dem Kapitel 5 «Usage of preconditions» grundsätzlich die Möglichkeit, bei einem verbindungsaufbau in SIP Resourcen zu reservieren und erst bei erfolgreichem garantiertem Aufbau des Bearers (Sprachkanals) den B-Teilnehmer zu rufen. Dabei wurde die Signalisierung bis zum B-Tln gesendet, aber mit dem Hinweis, den B-Tln tatsächlich noch nicht zu rufen, da die Vorbedingungen für die Sicherstellung der Qualität der Verbindung noch nicht erreicht sind, da die Resourcen erst noch reserviert/garantiert werden müssen. Durch eine Logik im Endgerät (kann auch ein MGCF/MGW sein, etc , MGCF: media gateway control function; MGW: media gateway) kann anhand der SIP Signalisierung mithilfe des SDP Protokolls RFC2327 «SDP: Session description protocol» das Klingeln beim B-Tln unterlassen werden.

Laut IETF RFC 3312 Kapitel 6 [5] sollte ein user Agent Server, welcher also ein SDP Offer mit «preconditions» (Vorbedingungen) erhält, den B- Tln noch nicht anklingeln. Erst wenn die notwendigen Vorbedingungen erreicht sind, soll dann der Tln. tatsächlich gerufen werden. Die Vorbedingungen werden im SDP mitgesendet, und wenn die Vorbedindungen erreicht wurden, wiederum an den B-Tln gesendet, sodass das B-seitige Endgerät dies nun auch erfährt und nun den B-Tln ruft.

Im hier vorliegenden Fall wird dieser Mechanismus nun nachgenutzt, um den Ruf Richtung B-Tln zügig aufzubauen, jedoch noch nicht klingeln zu lassen. Erst wenn das Prepaidkonto genügend Geld aufweist, also die positive Antwort vom Charging System OCS empfangen wurde, wird nun die Indikation, dass die Preconditions erfüllt sind, Richtung B-Tln gesendet. Folgerichtig erkennt das Endgerät dies, und ruft den Tln erst jetzt, nachdem garantiert ist, dass ausreichend Budget vorhanden ist. Somit kommt es nicht zu sogenannten Klingelstörungen.

### Liste der verwendeten Bezugszeichen, Akronyme; Glossar

- 3GGP: 3rd Generation Partnership Project http://www.3gpp.org
- ABMF: Account balance Management Function
- AuS: Autorisierungsserver, nicht standardisierter Begriff; unter dem Begriff «Autorisierungsserver» ist auch ein Online Charging System subsummiert
- BGCF: Breakout Gateway Control Function
- CSCF: Call Server Control Function
- CTF: Charging Trigger Function
- I-CSCF: Interrogating CSCF
- IP: Internet Protokoll
- ISDN: Integrated service digital network
- ISUP: ISDN User Part
- ITU-T: Telecommuncation Standardization sector of ITU
- LE: Line Exchange; Ortsvermittlungsstelle
- MG: Media Gateway
- MGC: Media Gateway Control
- OCF: Online Charging Function
- OCS: Online Charging System
- P-CSCF: Proxy CSCF
- PSTN: Public switched telecommunication network
- RF: Rating Function
- RFC: request for comment
- S-CSCF: Serving CSCF
- SE: Service Element
- SIP: Session Initiation Protocol
- SIP-Subs: SIP-Subscriber und SIP-Client werden synonym verwendet
- SS: Subsystem,
auch IMS IP multi media subsystem genannt
- Subs: Subscriber; Teilnehmer
- TX: Transit Exchange; Transitvermittlungsstelle
- 10: MGC-MGC-Signalling (Bearer Aufbau)

### Literaturliste

[1] 3GPP TR 21.905
   3rd Generation Partnership Project; Technical specification group Services and system aspects; vocabulary for 3GPP specifications (release 7)
[2] IETF RFC2705
   Media Gateway Control Protocol (MGCP) Version 1.0. M. Arango, A, Dugan, I. Elliott, C. Huitema, S. Pickett. October 1999, Obsoleted by RFC3435, Updated by RFC3660.
[3] ITU-T Q.1912 .5
   Interworking between Session Initiation Protocol (SIP) and Bearer Independent Call Control protocol or ISDN User Part
[4] 3GPP TS 23.240
   3rd Generation Partnership Project; Technical Specification
   Universal Mobile Telecommunications System (UMTS);
   Telecommunication management; Charging management;
   Charging architecture and principles (3GPP TS 32.240 version 6.3.0 Release 6)
[5] IETF RFC 3312
   Integration of Resource Management and Session
   Initiation Protocol (SIP)
   G. Camarillo, Ed. Ericsson, W. Marshall, Ed. AT&T,
   J. Rosenberg dynamicsoft. October 2002.
[6] ETSI TR 101 943 V2.1.1 (2004-10)
   Lawful Interception (LI); Concepts of Interception in a Generic Network Architecture
[7] ETSI TR 102 053 v1.1.1 (2002-03)
   Telecommunications security; Lawful Interception (LI); Notes on ISDN lawful interception functionality

## Patentansprüche

1. Verfahren zur Berechtigungsprüfung bei einem Verbindungsaufbau von einem an einem packetvermittelten Netzwerk (IP) angeschlossenen A-Teilnehmer (SIP-Subs) zu einem durch eine Ziffernfolge adressierbaren B-Teilnehmer (Subs), wobei für einen der Teilnehmer in einem Autorisierungsserver (AuS) eine Berechtigung geführt wird,
**dadurch gekennzeichnet, dass**
der Verbindungsaufbau eingeleitet aber nicht abgeschlossen wird, solange vom Autorisierungsserver (AuS) keine Meldung vorliegt, wonach für die Verbindung oder ein zu dieser Verbindung aufzuschaltender Dienst eine Berechtigung vorliegt.

2. Verfahren nach Anspruch 1,
**dadurch gekennzeichnet, dass**
der Verbindungsaufbau vorerst mit Ausnahme der letzten Ziffer der den B-Teilnehmer (Subs) adressierenden Ziffernlfolge eingeleitet wird.

3. Verfahren nach Anspruch 1 oder 2,
**dadurch gekennzeichnet, dass**
der Autorisierungsserver (AuS) als ein für den A-Teilnehmer (SIP-Subs) geführtes Konto in einem Charging System (OCS) ausgebildet ist, und die Meldung ein ausreichendes Guthaben für den betreffenden A-Teilnehmer (SIP-Subs) repräsentiert.

4. Verfahren nach Anspruch 3,
**dadurch gekennzeichnet, dass**
der A-Teilnehmer (SIP-Subs) einer SIP-Domäne zugeordnet ist, wobei das Charging System (OCS) nach dem Prepaid-Verfahren geführt wird und die letzte Ziffer mit einer SIP-INVITE-Meldung gesendet wird.

5. Verfahren nach einem der Ansprüche 1 bis 4,
**dadurch gekennzeichnet, dass**
der Verbindungsaufbau mit einer Vorbedingung eingeleitet wird, wonach beim B-Teilnehmer (Subs) noch kein Ruf/Klingeln angelegt werden darf.

6. Verfahren nach Anspruch 5,
**dadurch gekennzeichnet, dass**
die Vorbedingung gemäss RFC 3312 spezifiziert ist.

7. Verfahren nach Anspruch 6,
**dadurch gekennzeichnet, dass**
die Vorbedingung durch eine positive Rückmeldung vom Charging System (OCS) erreicht wird.

8. System mit Mitteln zur Durchführung der Schritte des Verfahrens nach einem der Ansprüche 1 bis 7.
